(19) **Europäisches Patentamt / European Patent Office / Office européen des brevets**

(11) **EP 4 515 732 B1**

(12) **EUROPEAN PATENT SPECIFICATION**

(45) Date of publication and mention
of the grant of the patent:
**31.12.2025 Bulletin 2026/01**

(21) Application number: **23719037.6**

(22) Date of filing: **18.04.2023**

(51) International Patent Classification (IPC):
**H04B 10/114** $^{(2013.01)}$  **G01S 1/70** $^{(2006.01)}$
**H04B 10/116** $^{(2013.01)}$  **G01S 5/16** $^{(2006.01)}$

(52) Cooperative Patent Classification (CPC):
**H04B 10/1149; H04B 10/1143; H04B 10/116**

(86) International application number:
**PCT/EP2023/059977**

(87) International publication number:
**WO 2023/208644 (02.11.2023 Gazette 2023/44)**

(54) **A 2D BEAM SELECTION PROCEDURE IN AN OPTICAL WIRELESS COMMUNICATION SYSTEM**

2D-STRAHLAUSWAHLVERFAHREN IN EINEM OPTISCHEN DRAHTLOSEN
KOMMUNIKATIONSSYSTEM

PROCÉDURE DE SÉLECTION DE FAISCEAU 2D DANS UN SYSTÉME DE COMMUNICATION
OPTIQUE SANS FIL

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **25.04.2022 EP 22169615**

(43) Date of publication of application:
**05.03.2025 Bulletin 2025/10**

(73) Proprietor: **Signify Holding B.V.
5656 AE Eindhoven (NL)**

(72) Inventors:
• **VAN VOORTHUISEN, Paul, Henricus, Johannes,
Maria**
**5656 AE Eindhoven (NL)**
• **ROJAS CALVENTE, Francisco, David**
**5656 AE Eindhoven (NL)**

(74) Representative: **Verweij, Petronella Daniëlle
Signify Netherlands B.V.
Intellectual Property
High Tech Campus 7
5656 AE Eindhoven (NL)**

(56) References cited:
**CN-U- 205 844 514    US-B1- 11 057 108**

**Description**

FIELD OF THE INVENTION

The invention relates to the field of optical wireless communication, such as Li-Fi communication. More particularly, various apparatus, systems, and methods are disclosed herein related to a secure optical wireless communication system.

BACKGROUND OF THE INVENTION

To enable more and more electronic devices like laptops, tablets, and smartphones to connect wirelessly to the Internet, wireless communication confronts unprecedented requirements on data rates and link qualities, and such requirements keep on growing year over year, considering the emerging digital revolution related to Internet-of-Things (IoT). Radio frequency technology like Wi-Fi has limited spectrum capacity to embrace this revolution. In the meanwhile, light fidelity (Li-Fi) is drawing more and more attention with its intrinsic security enhancement and capability to support higher data rates over the available bandwidth in visible light, Ultraviolet (UV), and Infrared (IR) spectra. Furthermore, Li-Fi is directional and shielded by light blocking materials, which provides it with the potential to deploy a larger number of access points, as compared to Wi-Fi, in a dense area of users by spatially reusing the same bandwidth. These key advantages over wireless radio frequency communication make Li-Fi a promising secure solution to mitigate the pressure on the crowded radio spectrum for IoT applications and indoor wireless access. Other possible benefits of Li-Fi may include guaranteed bandwidth for a certain user, and the ability to function safely in areas otherwise susceptible to electromagnetic interference. Therefore, Li-Fi is a very promising technology to enable the next generation of immersive connectivity.

Achieving a high data throughput and/or long range in a point-to-point OWC system, while maintaining a wide-angle coverage, is a challenge. This is not only because of the increased power requirements for the transmitter, but also because increasing the transmission power in optical systems above certain level is not always possible due to eye-safety requirements.

To address this problem, it is known to achieve overall coverage by using a set of small angle beams of which only one will be enabled for actual data communication, therefore reducing power consumption. Due to some overlapping of the beams, which is necessary to enable seamless switching between beams, a receiving device will detect a number of beams at the same time and will select the best one for communication.

CN205844514U is related to a utility model that relates to a kind of preferably two light source chamber interior locating device and systems based on visible light communication.

US11057108B1 is related to a lighting system that employs out-of-band (OOB) commissioning techniques, and includes a plurality of uncommissioned luminaires and a commissioning device. The commissioning device receives, via a visible light camera, over a VLC communication band, a respective VLC code of a respective uncommissioned luminaire. Commissioning device receives via a radio frequency (RF) transceiver a respective RF identifier of the respective uncommissioned luminaire. In response to receiving the respective VLC code and the respective RF identifier, commissioning device determines whether the respective uncommissioned luminaire is in a candidate luminaire roster of candidate luminaires suitable for commissioning. Based on the determination, commissioning device accepts or rejects commissioning of the respective uncommissioned luminaire in the space.

SUMMARY OF THE INVENTION

To assist such a beam selection procedure, unique codes may be used to identify each transmitted beam. The number of required codes grows rapidly when placing the beam in a matrix to cover a certain area, e.g., growing quadratically for a square matrix. To select the correct beam at a remote receiver device, the received signal needs to be cross correlated with every possible CDMA code that the transmitter might use, generating a correlation peak whose amplitude corresponding to the received signal strength of each beam. Since cross correlation is a computationally expensive operation, with the increasing number of beams it becomes difficult to scale, especially when using a low-power processor with limited CPU and memory capabilities (e.g., a microcontroller) for decoding the signals.

By encoding each light beam by a pair of codes representing its coordinates in an emitter matrix, the quadratic growth of required codes is brought back to a linear growth. By using row and column properties each emitter in a beam array may be uniquely identified or addressed by those two parameters. As an example, emitters in a N x N beam array may be addressed by $2N$ codes, instead of $N^2$ codes. In this way, the number of transmitted codes for identifying a beam is reduced, which saves memory usage and transmission power of the transmitter. Accordingly, the complexity for detecting a beam is also reduced at the receiver side, e.g., the computation of cross-correlation is simplified.

In view of the above, the present disclosure is directed to methods, apparatus, and systems for providing an efficient 2D beam selection procedure in an optical wireless communication system. More particularly, the goal of this invention is achieved by an optical wireless communication device as claimed in claim 1, by an optical wireless communication system as claimed in claim 10, by a beam selection method of an optical wireless communication device as claimed in claim 13, and by a method of a remote optical receiver for assisting beam selection as claimed in claim 14.

In accordance with a first aspect of the invention an optical wireless communication device is provided. An optical wireless communication device comprises a two-dimensional array of emitters each emitter arranged to emit an optical signal and having an individual coverage area; wherein the two-dimensional array of emitters is arranged to create a combined coverage area larger than the individual coverage area, with each individual coverage area evenly distributed within the combined coverage area; a receiver configured to receive a feedback from a remote device in the combined coverage area; and a controller configured to assign an address to each emitter out of the two-dimensional array of emitters, each address comprising a pair of codes representing coordinates on an X-axis and a Y-axis, respectively, according to a Cartesian coordinate system, to uniquely identify each emitter in the Cartesian coordinate system; wherein each emitter out of the two-dimensional array of emitters is configured to send a beacon signal comprising its address for assisting the remote device to provide the feedback, with the plurality of emitters configured to send beacon signals according a Code-Division Multiple Access; and the controller is configured to select an emitter out of the two-dimensional array of emitters for establishing an optical wireless data link with the remote device according to the feedback received from the remote device.

The optical wireless communication may be carried out in visible light, Ultraviolet (UV), and Infrared (IR) spectra. Thus, the optical wireless communication may also be called a Li-Fi communication or a Visible Light Communication (VLC). Each emitter comprises at least a light source for optical data transmission. The light source may be one of a light-emitting diode (LED), a laser diode, a vertical-cavity surface-emitting laser (VCSEL), or an Edge Emitting Laser Diode (EELD). Preferably, the light source comprises at least one of a LED and a VCSEL.

It is known that to support high data rate optical wireless communication, it is efficient to use narrow beam emitters. However, with a single narrow beam emitter, the coverage area can be quite limited. Therefore, in a practical system, the overall coverage may be accomplished by deploying an array of small angle emitters in the transmitter side, and only the one with best alignment with a remote receiver will be enabled for data communication. In that sense, the transmitter achieves high data rate and large coverage with a relatively low power consumption.

Unique code sequences can be used to identify each emitter of the emitter array. However, the number of required unique code sequences grows rapidly with the increasing of the matrix size. Reduction of the number of code sequences can be addressing each emitter by a pair of codes to identify coordinates in the X-axis and a Y-axis, respectively, according to a Cartesian coordinate system. In this manner, an emitter is identified by the code combination. For example, a beam matrix of N x N would normally require $N^2$ different code sequences while emitting a combination of its row and column index would only require 2N different code sequences. It is clear that the reduction factor grows with the increase of the matrix size.

Since the pair of codes uniquely identifying an emitter out of the array, when each emitter is configured to send a beacon signal comprising its address and the plurality of emitter are configured to send the beacon signals simultaneously according to a Code-Division Multiple Access, a remote device will be able to distinguish the beacon signals from one another and provide a feedback to the optical wireless communication device. The feedback will then be used by the optical wireless communication device to select an emitter out of the array for data communication.

Beneficially, the codes used in the Cartesian coordinate system to address the emitters are orthogonal to each other.

The larger the code distance between any two codes used as coordinates in the Cartesian coordinate system, the easier for a remote device to distinguish an address from the beacon signals received from the optical wireless communication device. Therefore, it is preferable that all the codes are orthogonal to each other.

**In** one example, the axes of the Cartesian coordinate system are aligned with the row and column of the two-dimensional array horizontally and vertically.

The two-dimensional array of emitters is typically deployed as a matrix with a uniform layout, such that the separation distance between any two emitters in the same row or the same column is the same, e.g., d. The axes of the Cartesian coordinate system are used as references for addressing the emitters in the array. The axes may be aligned with the rows and columns of the two-dimensional array, or have a different orientation as compared to the rows and columns of the array.

When the axes are aligned with the row and column of the two-dimensional array, the separation distance between any two emitters sharing a same X-axis or Y-axis coordinate is the same as the physical separation distance between any two emitters in the same row or the same column, e.g., d.

In another example, the axes of the Cartesian coordinate system are rotated through an angle as compared to the row and column of the two-dimensional array to increase a minimum separation distance between any two emitters out of the two-dimensional array sharing a same X-axis or Y-axis coordinate.

To increase the separation distance between any two emitters sharing a same X-axis or Y-axis coordinate, it is beneficial to rotate the axes of the Cartesian coordinate system through an angle as compared to the row and column of the two-dimensional array. And then the minimum separation distance of two emitters sharing a same X-axis or Y-axis coordinate will be larger than d.

Beneficially, the axes of the Cartesian coordinate system are rotated by arctangent (0.5)-degree as compared to the row and column of the two-dimensional array.

This may maximize the minimum separation distance of two emitters sharing a same X-axis or Y-axis coordinate for an array with N x N size. For a different size of the matrix, another rotation angle may be even more beneficial.

In one option, the receiver is an RF receiver.

The feedback may be provided in a radio frequency channel according to a short-range wireless communication protocol, such as a Wi-Fi, BLE, or Zigbee standard.

In another option, the receiver is an optical receiver.

The feedback may also be provided in an optical spectrum, either same as the optical wireless data communication or another band.

Beneficially, the optical receiver is further configured to receive an optical data signal in a bi-directional optical wireless data link.

Advantageously, the two-dimensional array of emitters is arranged in a matrix along two orthogonal directions or in a hexagonal structure along two directions.

Although the optical transmitters may be arranged in an orthogonal array/matrix, it may be beneficial to use a hexagonal structure instead of a square or rectangular structure. A hexagonal structure allows for a reduced overlap of coverage areas of adjacent emitters.

In accordance with a second aspect of the invention, an optical wireless communication system is provided. An optical wireless communication system comprises an optical wireless communication device according to the present invention; a remote optical receiver comprising at least one photodiode configured to detect a plurality of beacon signals sent by the optical wireless communication device; a controller configured to decode a first address comprised in a beacon signal with a highest received signal strength out of the plurality of beacon signals; wherein the remote optical receiver is configured to provide a feedback on the first address to the optical wireless communication device, and the optical wireless communication device is configured to select a corresponding emitter according to the first address indicated in the feedback to establish an optical wireless communication link with the remote optical receiver.

Upon detecting the plurality of beacon signals sent by the optical wireless communication device, the remote optical receiver needs to identify a beacon signal with the strongest received signal strength. The emitter sends the beacon signal with the strongest received signal strength is the one best aligned with the remote optical receiver. Since the address information is embedded in the beacon signal, by distinguishing the beacon signal, the remote optical receiver can also decode the address of that emitter and provide a feedback to the optical wireless communication device on that decoded address.

The remote optical receiver comprises at least one photodiode. The photodiode may also be called a light detector, a photo detector or a photo sensor, which may be a PIN diode, an Avalanche Photo Diode (APD), or a photomultiplier. The field-of-view of the remote optical receiver may only cover a subset of the plurality of emitters of the optical wireless communication device. And then, the remote optical receiver may only detect a subset of the beacon signals transmitted by the optical wireless communication device, and the first address is selected from the subset of the beacon signals received by the remote optical receiver.

Beneficially, the controller of the remote optical receiver is configured to calculate cross-correlation results between the detected plurality of beacon signals with each of the codes used as coordinates in the Cartesian coordinate system of the optical wireless communication device, and to sum the cross-correlation results for each pair of codes representing coordinates on the X-axis and the Y-axis of the Cartesian coordinate system to derive a relative signal strength for each beacon signal, and the beacon signal with a highest received signal strength is selected according to the relative signal strength.

The emitters of the optical wireless communication device send the plurality of beacon signals simultaneously according to the code division multiple access. The detection of the beacon signals is based on cross correlation between local copies of the code sequences and the received overlayed beacon signals. Since the address of an individual emitter of the optical wireless communication device comprises a pair of codes, cross-correlation is carried out with each individual code, representing either an X-axis or a Y-axis. The sum of the cross-correlation results for each pair of codes representing the address of an individual emitter is used to estimate a relative signal strength for each beacon signal. Since the emitters all transmit with the same output power, the higher the relatively signal strength received by the remote optical receiver, the better alignment between that emitter and the remote optical receiver.

In one example, the remote optical receiver further comprises an RF transmitter or an optical transmitter to send the feedback on the first address to the optical wireless communication device.

The feedback to the optical wireless communication device may be provided in a radio frequency band or an optical band.

In a preferred setup, the remote optical receiver comprises an optical transmitter, and then a bi-directional optical data link may be established.

In accordance with a third aspect of the invention, a beam selection method is provided. A beam selection method comprises steps of an optical wireless communication device: emitting an optical signal and having an individual coverage area by each emitter out of a two-dimensional array of emitters of the optical wireless communication device; creating a combined coverage area by the two-dimensional array of emitters, with the combined coverage area larger than an individual coverage area of an emitter out of the two-dimensional array of emitters and each individual coverage area evenly distributed within the combined coverage area; assigning an address to each emitter out of the two-dimensional array of emitters, each address comprising a pair of codes representing coordinates on an X-axis and a Y-axis, respectively, according to a Cartesian coordinate system, to uniquely identify each emitter in the Cartesian coordinate system; sending by each emitter a beacon signal comprising its assigned address for assisting a remote device to provide a feedback; sending beacon signals by the plurality of emitters according to a Code-Division Multiple Access; receiving the feedback from the remote device in the combined coverage area; and selecting an emitter out of the two-dimensional array of emitters for establishing an optical wireless data link according to the feedback received from the remote device.

In accordance with a further aspect of the invention, a method of a remote optical receiver is provided. The method comprises steps of a remote optical receiver: detecting a plurality of beacon signals sent by the optical wireless communication device; decoding a first address comprised in a beacon signal with a highest received signal strength out of the plurality of beacon signals; and providing a feedback on the first address to the optical wireless communication device.

Beneficially, the method of the remote optical receiver further comprises steps of calculating cross-correlation results between the detected plurality of beacon signals with each of the codes used as coordinates in the Cartesian coordinate system of the optical wireless communication device; summing the cross-correlation results for each pair of codes representing coordinates on the X-axis and the Y-axis of the Cartesian coordinate system to derive a relative signal strength for each beacon signal; and selecting the beacon signal with the highest received signal strength according to the relative signal strength.

## BRIEF DESCRIPTION OF THE DRAWINGS

In the drawings, like reference characters generally refer to the same parts throughout the different figures. Also, the drawings are not necessarily to scale, emphasis instead generally being placed upon illustrating the principles of the invention.

FIG. 1 illustrates an example of addressing a two-dimensional array of emitters according to the present invention;
FIG. 2 illustrates another example of addressing a two-dimensional array of emitters according to the present invention;

FIG. 3 illustrates a further example of addressing a two-dimensional array of emitters according to the present invention;
FIG. 4 demonstrates a block diagram of an optical wireless communication device;
FIG. 5 shows an implementation example of address generation in an optical wireless communication device; and
FIG. 6 shows an implementation example of a remote optical receiver.

## DETAILED DESCRIPTION OF EMBODIMENTS

The embodiments set forth below represent information to enable those skilled in the art to practice the embodiments. Upon reading the following description in light of the accompanying drawings, those skilled in the art will understand the concepts of the disclosure and will recognize applications of these concepts not particularly addressed herein. It should be understood that these concepts and applications fall within the scope of the disclosure.

In optical wireless systems intended for data communication (LiFi) the overall coverage can be accomplished by using a set of small angle beams of which only one will be enabled for data communication, therefore reducing power consumption. Unique code sequences can be used to identify each beam. However, the number of required unique code sequences grows rapidly when placing the beam in a matrix.

Reduction of the number of code sequences can be achieved by emitting two codes per beam. In this manner a beam or an emitter is identified by the code combination. For example, a beam matrix of 5x5 would normally require 25 different code sequences while emitting a combination of its row and column index would only require 10 different code sequences. Advantageously, the reduction factor grows when the matrix size increases.

For example, if each emitter transmits a single orthogonal code sequence, such as a CDMA code, a remote receiver obtains the signal strength of each beam by correlating the received signal with each used CDMA code. When the correlator output shows a clear peak, there is a match between the CDMA code and the code sequence present in the received signal. The peak amplitude indicates the received signal strength of corresponding beam.

$$A_{beam1} = Rx \otimes CDMA_1$$

However, when each emitter emits a pair of codes (e.g., its row and column code), the receiver needs to correlate with the corresponding two codes, respectively:

$$Rx \otimes (CDMA_i + CDMA_j)$$

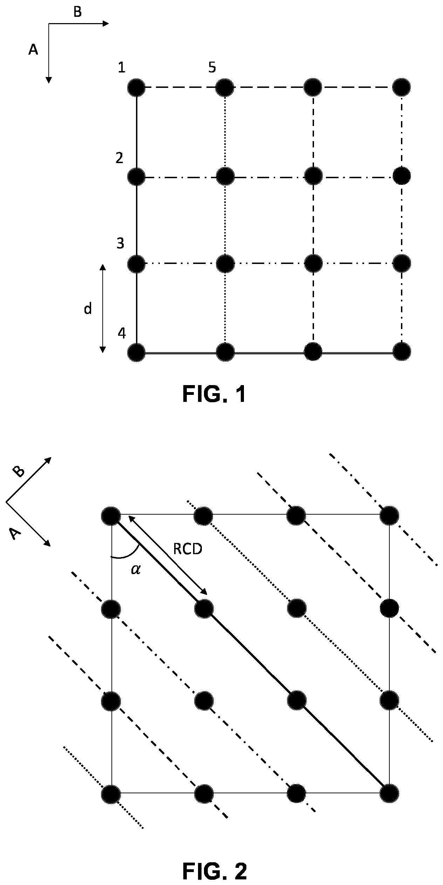

FIG. 1 illustrates an example of addressing a two-dimensional array of emitters, with each solid dots representing an individual emitter. For the ease of illustration, the example is provided with a 4x4 beam array. It can be encoded using eight CDMA codes as indicated by solid and dash lines in directions A and B in FIG. 1. Directions A and B represents the X-axis and Y-axis of a Cartesian coordinate system used to address the plurality of emitters. Each line represents a different CDMA code. Thus, an emitter can be uniquely identified by a pair of codes representing coordinates on the X-axis and the Y-axis, respectively.

By using only 8 CDMA codes with 4 codes used to identify rows and 4 codes used to identify columns, the code pairs assigned to emitters are not fully orthogonal to each other, because each CDMA code is shared by 4 emitters either on the same row or on the same column. For example, to detect beam 1 the correlation would look like:

$$Rx \otimes (CDMA_{A1} + CDMA_{B1})$$

When, for example, the receiving device is exactly in the center of beam 1, the correlation will detect $CDMA_{A1}$ and $CDMA_{B1}$ originating from beam1. On top of this, in case of overlapping beams, $CDMA_{A1}$ emitted by beam5 and $CDMA_{B1}$ emitted by beam2 will add to the result and gives a higher peak value. In general, with respect to the real signal strength of a beam, the correlator will show a positive offset. The amount of offset depends on the amount of overlap between the coverage area of adjacent emitters, and the actual position of the remote receiver.

The described effect can be counteracted by distributing the repeated CDMA codes such that their distance become larger, and that at least the code pairs for neighboring emitters become fully orthogonal. For the configuration of FIG. 1, the axes of the Cartesian coordinate system are aligned with the row and column of the two-dimensional array horizontally and vertically. Thus, the minimum repeated code distance (RCD) is "d", which is the separation distance between two emitters in the two-dimensional array. To obtain orthogonal addresses for neighboring emitters, the minimum RCD shall be increased to 2d.

FIG. 2 illustrates another example of addressing a two-dimensional array of emitters. Here, the assignment of code is only demonstrated for direction A. Note that direction B is perpendicular to direction A, and codes are assigned in the same approach as direction A. In the example of FIG. 2, the axes of the Cartesian coordinate system are no longer aligned with the row and column of the two-dimensional array horizontally and vertically. Instead, the axes of the Cartesian coordinate system are rotated through an angle ($\alpha$) as compared to the row and column of the two-dimensional array to increase a minimum separation distance between any two emitters out of the two-dimensional array sharing a same X-axis or Y-axis coordinate. FIG. 2 shows a rotation angle ($\alpha$) of 45-degree, which leads to a minimum Repeated Code Distance (RCD) of " $\sqrt{2}d$ ".

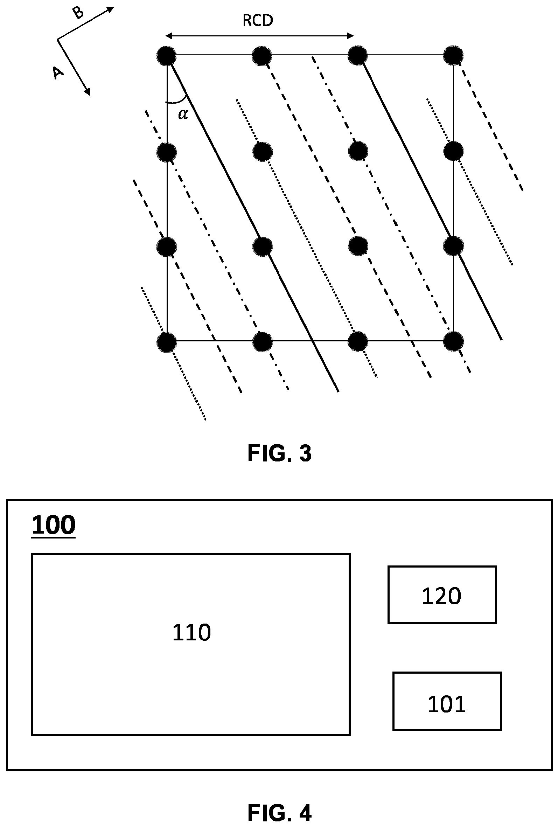

Similarly, FIG. 3 illustrates a further example of addressing a two-dimensional array of emitters. Same as the example in FIG. 2, the axes of the Cartesian coordinate system are also rotated through an angle ($\alpha$) as compared to the row and column of the two-dimensional array. Note that as compared to the previous examples, the repeated code lines break in parts by wrapping. With the rotation angle ($\alpha$) of arctangent (0.5)-degree in FIG. 3, it leads to a minimum Repeated Code Distance (RCD) of "2d" between the wrapped lines, considering that along the lines the code distance is even larger ( $\sqrt{5}d$ ). Therefore, the example shown in FIG. 3 is optimum for a 4x4 emitter array, and the code sequences assigned to neighboring emitters are fully orthogonal.

In summary, the efficiency of a beam selection procedure can be improved by encoding a N x N emitter array by 2N CDMA codes. To maximize the orthogonality between code sequences assigned to neighboring emitters, it is ideal to maximize the minimum Repeated Code Distance (RCD). The disclosed method can be applied to matrices of any size, e.g., N x M with N ≠ M. The configuration when RCD is maximized may depend on the actual size of the matrix. In another word, the optimal rotation angle ($\alpha$) may need to be adjusted according to the actual size of the two-dimensional array.

FIG. 4 demonstrates a block diagram of an optical wireless communication device 100. The optical wireless communication device 100 comprises at least a two-dimensional array of emitters 110, a receiver 120, and a controller 101. Each emitter is arranged to emit an optical signal and having an individual coverage area; wherein the two-dimensional array of emitters 110 is arranged to create a combined coverage area larger than the individual coverage area, with each individual coverage area evenly distributed within the combined coverage area. The receiver 120 is configured to receive a feedback from a remote device in the combined coverage area. The controller 101 is configured to assign an address to each emitter out of the two-dimensional array of emitters 110, with each address comprising a pair of codes representing coordinates on an X-axis and a Y-axis, respectively, according to a Cartesian coordinate system, to uniquely identify each emitter in the Cartesian coordinate system. Each emitter out of the two-dimensional array of emitters 110 is configured to send a beacon signal comprising its address for assisting the remote device to provide the feedback, with the plurality of emitters configured to send beacon signals according a Code-Division Multiple Access; and the controller 101 is configured to select an emitter out of the two-dimensional array of emitters 110 for establishing an optical wireless data link with the remote device according to the feedback received from the remote device.

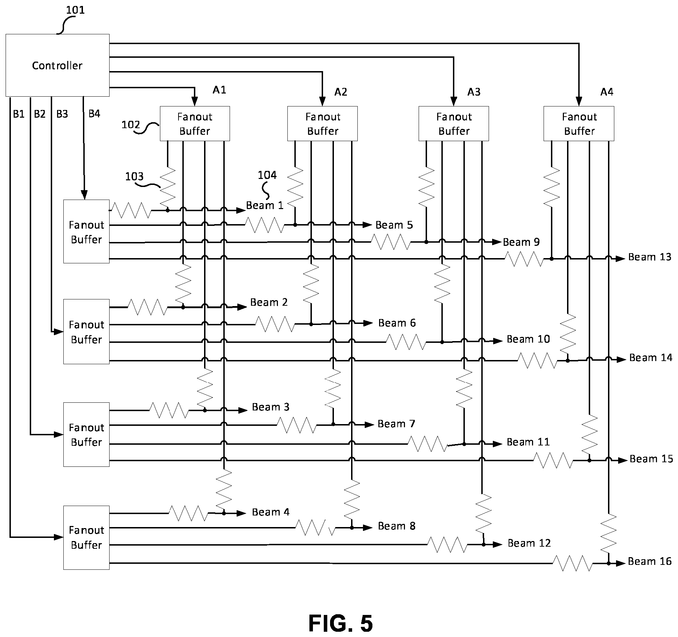

FIG. 5 shows an implementation example of address generation in an optical wireless communication device. For simplicity, the example in FIG. 5 is corresponding to the addressing method used in FIG. 1. A controller 101, which may be a microcontroller, generates 8 different CDMA codes on 8 different pins (4 per row, 4 per column). Each pin is connected to a fanout buffer 102, to be able to sum each code of a specific row with every column code without interfering each other. This sum is performed by adding a resistor 103 per line of the output buffer. This will generate a three-level signal per beam 104, which will contain the sum of the row and column codes.

The reduction of required number of CDMA codes also leads to reduced receiver complexity. As mentioned earlier, the signal strength detection per beam will be compared according to:

$$A_{beam} = Rx \otimes (CDMA_{Ai} + CDMA_{Bj})$$

For implementation efficiency it is preferable to split this calculation in two separate parts:

$$a_i = Rx \otimes (CDMA_{Ai})$$

$$b_i = Rx \otimes (CDMA_{Bj})$$

$$A_{beam} = a_i + b_j$$

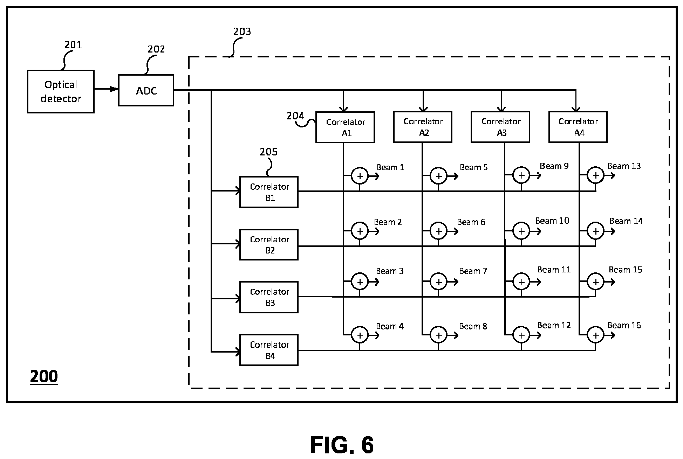

The terms $a_i$ and $b_j$ can be reused for multiple beams. FIG. 6 shows a functional diagram of the beam decoding in a remote optical receiver. The signal is collected by an optical detector 201 and fed to an ADC 202, which can be external or integrated in the controller of the optical receiver. The controller 203 then will perform the correlation of the received signal with the 8 possible correlators, 4 per row 205 and 4 per column 204. By summing the correlator output ($a_i$ and $b_j$) of each row-column correlator pair, the combined correlator amplitude can be obtained for each possible beam. The beam with the strongest correlation result will then be selected as the optimal received beam. And the address indicated in the code pair will be provided as a feedback to the optical transmitter.

The methods according to the invention may be implemented on a computer as a computer implemented method, or in dedicated hardware, or in a combination of both.

Executable code for a method according to the invention may be stored on computer/machine readable storage means. Examples of computer/machine readable storage means include non-volatile memory devices, optical storage medium/devices, solid-state media, integrated circuits, servers, etc. Preferably, the computer program product comprises non-transitory program code means stored on a computer readable medium for performing a method according to the invention when said program product is executed on a computer.

Methods, systems, and computer-readable media (transitory and non-transitory) may also be provided to implement selected aspects of the above-described embodiments.

**Claims**

1. An optical wireless communication device (100) comprising:

   - a two-dimensional array of emitters (110) each emitter arranged to emit an optical signal and having an individual coverage area; wherein the two-dimensional array of emitters (110) is arranged to create a combined coverage area larger than the individual coverage area, with each individual coverage area evenly distributed within the combined coverage area;
   - a receiver (120) configured to receive a feedback from a remote device in the combined coverage area; and,
   - a controller (101) configured to assign an address to each emitter out of the two-dimensional array of emitters, each address comprising a pair of codes representing coordinates on an X-axis and a Y-axis, respectively, according to a Cartesian coordinate system, to uniquely identify each emitter in the Cartesian coordinate system;

   wherein each emitter out of the two-dimensional array of emitters (110) is configured to send a beacon signal comprising its address for assisting the remote device to provide the feedback, with the plurality of emitters configured to send beacon signals according a Code-Division Multiple Access; and the controller (101) is configured to select an emitter out of the two-dimensional array of emitters (110) for establishing an optical wireless data link with the remote device according to the feedback received from the remote device.

2. The optical wireless communication device (100) of claim 1, wherein the codes used in the Cartesian coordinate system to address the emitters are orthogonal to each other.

3. The optical wireless communication device (100) of claim 1 or 2, wherein the axes of the Cartesian coordinate system are aligned with the row and column of the two-dimensional array horizontally and vertically.

4. The optical wireless communication device (100) of claim 1 or 2, wherein the axes of the Cartesian coordinate system are rotated through an angle (α) as compared to the row and column of the two-dimensional array to increase a minimum separation distance between any two emitters out of the two-dimensional array sharing a same X-axis or Y-axis coordinate.

5. The optical wireless communication device (100) of claim 4, wherein the angle (α) is arctangent (0.5)-degree.

6. The optical wireless communication device (100) of any one of previous claims, wherein the receiver (120) is an RF receiver.

7. The optical wireless communication device (100) of any one of previous claims 1-5, wherein the receiver (120) is an optical receiver.

8. The optical wireless communication device (100) of claim 7, wherein the optical receiver is further configured to receive an optical data signal in a bi-directional optical wireless data link.

9. The optical wireless communication device (100) of any one of previous claims, wherein the two-dimensional array of emitters (110) is arranged in a matrix along two orthogonal directions or in a hexagonal structure along two directions.

10. An optical wireless communication system comprising:

    - an optical wireless communication device (100) according to any one of previous claims;
    - a remote optical receiver (200) comprising:
    - at least one photodiode (201) configured to detect a plurality of beacon signals sent by the optical wireless communication device (100);
    - a controller (203) configured to decode a first address comprised in a beacon signal with a highest received signal strength out of the plurality of beacon signals;

    wherein the remote optical receiver (200) is configured to provide a feedback on the first address to the optical wireless communication device (100), and the optical wireless communication device (100) is configured to select a corresponding emitter according to the first address indicated in the feedback to establish an optical wireless communication link with the remote optical receiver (200).

11. The optical wireless communication system of claim 10, wherein the controller (203) of the remote optical receiver (200) is configured to calculate cross-correlation results between the detected plurality of beacon signals with each of the codes used as coordinates in the Cartesian coordinate system of the optical wireless communication device (100), and to sum the cross-correlation results for each pair of codes representing coordinates on the X-axis and the Y-axis of the Cartesian coordinate system to derive a relative signal strength for each beacon signal, and the beacon signal with a highest received signal strength is selected according to the relative signal strength.

12. The optical wireless communication system of claim 10 or 11, wherein the remote optical receiver (200) further comprises an RF transmitter or an optical transmitter to send the feedback on the first address to the optical wireless communication device (100).

13. A beam selection method comprising steps of an optical wireless communication device (100):

    - emitting an optical signal and having an individual coverage area by each emitter out of a two-dimensional array of emitters (110) of the optical wireless communication device (100);
    - creating a combined coverage area by the two-dimensional array of emitters (110), with the combined coverage area larger than an individual coverage area of an emitter out of the two-dimensional array of emitters (110) and each individual coverage area evenly distributed within the combined coverage area;
    - assigning an address to each emitter out of the two-dimensional array of emitters (110), each address comprising a pair of codes representing coordinates on an X-axis and a Y-axis, respectively, according to a Cartesian coordinate system, to uniquely identify each emitter in the Cartesian coordinate system;
    - sending by each emitter a beacon signal comprising its assigned address for assisting a remote device to provide a feedback;
    - sending beacon signals by the plurality of emitters (110) according to a Code-Division Multiple Access;
    - receiving the feedback from the remote device in the combined coverage area; and
    - selecting an emitter out of the two-dimensional array of emitters (110) for establishing an optical wireless data link according to the feedback received from the remote device.

14. A method for assisting a beam selection method according to claim 13, the method comprising steps of a remote optical receiver (200):

    - detecting a plurality of beacon signals sent by the optical wireless communication device (100);
    - decoding a first address comprised in a beacon signal with a highest received signal strength out of the plurality of beacon signals; and
- providing a feedback on the first address to the optical wireless communication device (100).

15. The method of claim 14 further comprising steps of:

- calculating cross-correlation results between the detected plurality of beacon signals with each of the codes used as coordinates in the Cartesian coordinate system of the optical wireless communication device (100);
- summing the cross-correlation results for each pair of codes representing coordinates on the X-axis and the Y-axis of the Cartesian coordinate system to derive a relative signal strength for each beacon signal; and
- selecting the beacon signal with the highest received signal strength according to the relative signal strength.

## Patentansprüche

1. Vorrichtung (100) für optische drahtlose Kommunikation, umfassend:

- eine zweidimensionale Anordnung von Emittern (110), wobei jeder Emitter eingerichtet ist, um ein optisches Signal auszusenden, und einen individuellen Abdeckungsbereich aufweist; wobei die zweidimensionale Anordnung von Emittern (110) eingerichtet ist, um einen kombinierten Abdeckungsbereich, der größer als der individuelle Abdeckungsbereich ist, zu schaffen, wobei jeder individuelle Abdeckungsbereich innerhalb des kombinierten Abdeckungsbereichs gleichmäßig verteilt ist;
- einen Empfänger (120), der konfiguriert ist, um eine Rückkopplung von einer entfernten Vorrichtung in dem kombinierten Abdeckungsbereich zu empfangen; und,
- eine Steuereinrichtung (101), die konfiguriert ist, um jedem Emitter aus der zweidimensionalen Anordnung von Emittern eine Adresse zuzuweisen, jede Adresse umfassend ein Paar Codes, das Koordinaten auf einer X-Achse beziehungsweise einer Y-Achse gemäß einem kartesischen Koordinatensystem darstellt, um jeden Emitter in dem kartesischen Koordinatensystem eindeutig zu identifizieren;

wobei jeder Emitter aus der zweidimensionalen Anordnung von Emittern (110) konfiguriert ist, um ein Bakensignal, umfassend seine Adresse, zu senden, zum Unterstützen der entfernten Vorrichtung, die Rückkopplung bereitzustellen, wobei die Vielzahl von Emittern konfiguriert ist, um Bakensignale gemäß einem Vielfachzugriff im Codemultiplex zu senden; und die Steuereinrichtung (101) konfiguriert ist, um einen Emitter aus der zweidimensionalen Anordnung von Emittern (110) auszuwählen, zum Herstellen einer optischen drahtlosen Datenverbindung mit der entfernten Vorrichtung gemäß der Rückkopplung, die von der entfernten Vorrichtung empfangen wird.

2. Vorrichtung (100) für optische drahtlose Kommunikation nach Anspruch 1, wobei die Codes, die in dem kartesischen Koordinatensystem verwendet werden, um die Emitter zu adressieren, orthogonal zueinander sind.

3. Vorrichtung (100) für optische drahtlose Kommunikation nach Anspruch 1 oder 2, wobei die Achsen des kartesischen Koordinatensystems an der Reihe und Spalte der zweidimensionalen Anordnung horizontal und vertikal ausgerichtet sind.

4. Vorrichtung (100) für optische drahtlose Kommunikation nach Anspruch 1 oder 2, wobei die Achsen des kartesischen Koordinatensystems verglichen mit den Reihen und Spalten der zweidimensionalen Anordnung um einen Winkel ($\alpha$) gedreht sind, um einen Mindesttrennabstand zwischen zwei beliebigen Emittern aus der zweidimensionalen Anordnung, die eine selbe X-Achsen- oder Y-Achsen-Koordinate teilen, zu steigern.

5. Vorrichtung (100) für optische drahtlose Kommunikation nach Anspruch 4, wobei der Winkel ($\alpha$) Arkustangens (0,5)-Grad beträgt.

6. Vorrichtung (100) für optische drahtlose Kommunikation nach einem der vorhergehenden Ansprüche, wobei der Empfänger (120) ein HF-Empfänger ist.

7. Vorrichtung (100) für optische drahtlose Kommunikation nach einem der vorhergehenden Ansprüche 1 bis 5, wobei der Empfänger (120) ein optischer Empfänger ist.

8. Vorrichtung (100) für optische drahtlose Kommunikation nach Anspruch 7, wobei der optische Empfänger ferner konfiguriert ist, um ein optisches Datensignal in einer bidirektionalen optischen drahtlosen Datenverbindung zu empfangen.

9. Vorrichtung (100) für optische drahtlose Kommunikation nach einem der vorhergehenden Ansprüche, wobei die zweidimensionale Anordnung von Emittern (110) in einer Matrix entlang zweier orthogonaler Richtungen oder in einer hexagonalen Struktur entlang zweier Richtungen eingerichtet ist.

10. System für optische drahtlose Kommunikation, umfassend:

- eine Vorrichtung (100) für optische drahtlose Kommunikation nach einem der vorhergehenden Ansprüche;
- einen entfernten optischen Empfänger (200), umfassend:
- mindestens eine Fotodiode (201), die konfiguriert ist, um eine Vielzahl von Bakensignalen, die durch die Vorrichtung (100) für optische drahtlose Kommunikation gesendet werden, zu erfassen;
- eine Steuereinrichtung (203), die konfiguriert ist, um eine erste Adresse, die in einem Bakensignal mit einer höchsten empfangenen Signalstärke enthalten ist, aus der Vielzahl von Bakensignalen zu decodieren;

wobei der entfernte optische Empfänger (200) konfiguriert ist, um eine Rückkopplung über die erste Adresse an die Vorrichtung (100) für optische drahtlose Kommunikation bereitzustellen, und die Vorrichtung (100) für optische drahtlose Kommunikation konfiguriert ist, um einen entsprechenden Emitter gemäß der ersten Adresse, die in der Rückkopplung angegeben ist, auszuwählen, um eine Verbindung für optische drahtlose Kommunikation mit dem entfernten optischen Empfänger (200) herzustellen.

11. System für optische drahtlose Kommunikation nach Anspruch 10, wobei die Steuereinrichtung (203) des entfernten optischen Empfängers (200) konfiguriert ist, um Kreuzkorrelationsergebnisse zwischen der erfassten Vielzahl von Bakensignalen mit jedem der Codes, die als Koordinaten in dem kartesischen Koordinatensystem der Vorrichtung (100) für optische drahtlose Kommunikation verwendet werden, zu berechnen und um die Kreuzkorrelationsergebnisse für jedes Paar Codes, das Koordinaten auf der X-Achse und der Y-Achse des kartesischen Koordinatensystems darstellt, zu summieren, um eine relative Signalstärke für jedes Bakensignal abzuleiten, und das Bakensignal mit einer höchsten empfangenen Signalstärke gemäß der relativen Signalstärke ausgewählt wird.

12. System für optische drahtlose Kommunikation nach Anspruch 10 oder 11, wobei der entfernte optische Empfänger (200) ferner einen HF-Sender oder einen optischen Sender umfasst, um die Rückkopplung über die erste Adresse an die Vorrichtung (100) für optische drahtlose Kommunikation zu senden.

13. Strahlauswahlverfahren, umfassend Schritte einer Vorrichtung (100) für optische drahtlose Kommunikation:

- Aussenden eines optischen Signals und Aufweisen eines individuellen Abdeckungsbereichs durch jeden Emitter aus einer zweidimensionalen Anordnung von Emittern (110) der Vorrichtung (100) für optische drahtlose Kommunikation;
- Schaffen eines kombinierten Abdeckungsbereichs durch die zweidimensionale Anordnung von Emittern (110), wobei der kombinierte Abdeckungsbereich größer als ein individueller Abdeckungsbereich eines Emitters aus der zweidimensionalen Anordnung von Emittern (110) ist und jeder individuelle Abdeckungsbereich innerhalb des kombinierten Abdeckungsbereichs gleichmäßig verteilt ist;
- Zuweisen einer Adresse zu jedem Emitter aus der zweidimensionalen Anordnung von Emittern (110), jede Adresse umfassend ein Paar Codes, das Koordinaten auf einer X-Achse beziehungsweise einer Y-Achse gemäß einem kartesischen Koordinatensystem darstellt, um jeden Emitter in dem kartesischen Koordinatensystem eindeutig zu identifizieren;
- Senden durch jeden Emitter eines Bakensignals umfassend seine zugewiesene Adresse, zum Unterstützen einer entfernten Vorrichtung, eine Rückkopplung bereitzustellen;
- Senden von Bakensignalen durch die Vielzahl von Emittern (110) gemäß einem Vielfachzugriff im Codemultiplex;
- Empfangen der Rückkopplung von der entfernten Vorrichtung in dem kombinierten Abdeckungsbereich;
und
- Auswählen eines Emitters aus der zweidimensionalen Anordnung von Emittern (110) zum Herstellen einer optischen drahtlosen Datenverbindung gemäß der Rückkopplung, die von der entfernten Vorrichtung empfangen wird.

14. Verfahren zum Unterstützen eines Strahlauswahlverfahrens nach Anspruch 13, das Verfahren umfassend Schritte eines entfernten optischen Empfängers (200):

- Erfassen einer Vielzahl von Bakensignalen, die durch die Vorrichtung (100) für optische drahtlose Kommunikation gesendet werden;
- Decodieren einer ersten Adresse, die in einem Bakensignal mit einer höchsten empfangenen Signalstärke enthalten ist, aus der Vielzahl von Bakensignalen; und
- Bereitstellen einer Rückkopplung über die erste Adresse an die Vorrichtung (100) für optische drahtlose Kommunikation.

15. Verfahren nach Anspruch 14, ferner umfassend die Schritte:

- Berechnen der Kreuzkorrelationsergebnisse zwischen der erfassten Vielzahl von Bakensignalen mit jedem der Codes, die als Koordinaten in dem kartesischen Koordinatensystem der Vorrichtung (100) für optische drahtlose Kommunikation verwendet werden;
- Summieren der Kreuzkorrelationsergebnisse für jedes Paar Codes, das Koordinaten auf der X-Achse und der Y-Achse des kartesischen Koordinatensystems darstellt, um eine relative Signalstärke für jedes Bakensignal abzuleiten; und
- Auswählen des Bakensignals mit der höchsten empfangenen Signalstärke gemäß der relativen Signalstärke.

## Revendications

1. Dispositif de communication optique sans fil (100) comprenant :

   - un réseau bidimensionnel d'émetteurs (110) chaque émetteur étant agencé pour émettre un signal optique et ayant une zone de couverture individuelle ; dans lequel le réseau bidimensionnel d'émetteurs (110) est agencé pour créer une zone de couverture combinée plus grande que la zone de couverture individuelle, chaque zone de couverture individuelle étant uniformément répartie au sein de la zone de couverture combinée ;
   - un récepteur (120) configuré pour recevoir une rétroaction en provenance d'un dispositif distant dans la zone de couverture combinée ; et,
   - un dispositif de commande (101) configuré pour attribuer une adresse à chaque émetteur parmi le réseau bidimensionnel d'émetteurs, chaque adresse comprenant une paire de codes représentant des coordonnées sur un axe X et un axe Y, respectivement, selon un système de coordonnées cartésiennes, pour identifier de manière unique chaque émetteur dans le système de coordonnées cartésiennes ;

   dans lequel chaque émetteur parmi le réseau bidimensionnel d'émetteurs (110) est configuré pour envoyer un signal de balise comprenant son adresse pour aider le dispositif distant à fournir la rétroaction, avec la pluralité d'émetteurs configurés pour envoyer des signaux de balise selon un accès multiple par répartition en code ; et le dispositif de commande (101) est configuré pour sélectionner un émetteur parmi le réseau bidimensionnel d'émetteurs (110) pour l'établissement d'une liaison de données optique sans fil avec le dispositif distant selon la rétroaction reçue du dispositif distant.

2. Dispositif de communication optique sans fil (100) selon la revendication 1, dans lequel les codes utilisés dans le système de coordonnées cartésiennes pour adresser les émetteurs sont mutuellement orthogonaux.

3. Dispositif de communication optique sans fil (100) selon la revendication 1 ou 2, dans lequel les axes du système de coordonnées cartésiennes sont alignés avec la rangée et la colonne du réseau bidimensionnel horizontalement et verticalement.

4. Dispositif de communication optique sans fil (100) selon la revendication 1 ou 2, dans lequel les axes du système de coordonnées cartésiennes sont mis en rotation selon un angle ($\alpha$) par comparaison avec la rangée et la colonne du réseau bidimensionnel pour augmenter une distance de séparation minimale entre deux émetteurs quelconques parmi le réseau bidimensionnel partageant une même coordonnée d'axe X ou d'axe Y.

5. Dispositif de communication optique sans fil (100) selon la revendication 4, dans lequel l'angle ($\alpha$) est une arctangente de (0,5) degré.

6. Dispositif de communication optique sans fil (100) selon l'une quelconque des revendications précédentes, dans lequel le récepteur (120) est un récepteur RF.

7. Dispositif de communication optique sans fil (100) selon l'une quelconque des revendications 1 à 5 précédentes, dans lequel le récepteur (120) est un récepteur optique.

8. Dispositif de communication optique sans fil (100) selon la revendication 7, dans lequel le récepteur optique est configuré en outre pour recevoir un signal de données optique dans une liaison de données optique sans fil bidirectionnelle.

9. Dispositif de communication optique sans fil (100) selon l'une quelconque des revendications précédentes, dans lequel le réseau bidimensionnel d'émetteurs (110) est agencé dans une matrice le long de deux directions orthogonales ou dans une structure hexagonale le long de deux directions.

10. Système de communication optique sans fil comprenant :

    - un dispositif de communication optique sans fil (100) selon l'une quelconque des revendications précédentes ;
    - un récepteur optique distant (200) comprenant :
    - au moins une photodiode (201) configurée pour détecter une pluralité de signaux de balise envoyés par le dispositif de communication optique sans fil (100) ;

- un dispositif de commande (203) configuré pour décoder une première adresse comprise dans un signal de balise avec une force de signal reçu la plus élevée parmi la pluralité de signaux de balise ;

dans lequel le récepteur optique distant (200) est configuré pour fournir une rétroaction sur la première adresse au dispositif de communication optique sans fil (100), et le dispositif de communication optique sans fil (100) est configuré pour sélectionner un émetteur correspondant selon la première adresse indiquée dans la rétroaction pour établir une liaison de communication optique sans fil avec le récepteur optique distant (200).

11. Système de communication optique sans fil selon la revendication 10, dans lequel le dispositif de commande (203) du récepteur optique distant (200) est configuré pour calculer des résultats de corrélation croisée entre la pluralité détectée de signaux de balise avec chacun des codes utilisés en tant que coordonnées dans le système de coordonnées cartésiennes du dispositif de communication optique sans fil (100), et pour sommer les résultats de corrélation croisée pour chaque paire de codes représentant des coordonnées sur l'axe X et l'axe Y du système de coordonnées cartésiennes pour dériver une force de signal relative pour chaque signal de balise, et le signal de balise avec une force de signal reçu la plus élevée est sélectionné selon la force de signal relative.

12. Système de communication optique sans fil selon la revendication 10 ou 11, dans lequel le récepteur optique distant (200) comprend en outre un transmetteur RF ou un transmetteur optique pour envoyer la rétroaction sur la première adresse au dispositif de communication optique sans fil (100).

13. Procédé de sélection de faisceau comprenant les étapes d'un dispositif de communication optique sans fil (100) :

- émettant un signal optique et ayant une zone de couverture individuelle par chaque émetteur parmi un réseau bidimensionnel d'émetteurs (110) du dispositif de communication optique sans fil (100) ;
- créant une zone de couverture combinée par le réseau bidimensionnel d'émetteurs (110), avec la zone de couverture combinée plus grande qu'une zone de couverture individuelle d'un émetteur parmi le réseau bidimensionnel d'émetteurs (110) et chaque zone de couverture individuelle étant uniformément répartie au sein de la zone de couverture combinée ;
- attribuant une adresse à chaque émetteur parmi le réseau bidimensionnel d'émetteurs (110), chaque adresse comprenant une paire de codes représentant des coordonnées sur un axe X et un axe Y, respectivement, selon un système de coordonnées cartésiennes, pour identifier de manière unique chaque émetteur dans le système de coordonnées cartésiennes ;
- envoyant par chaque émetteur un signal de balise comprenant son adresse attribuée pour aider un dispositif distant à fournir une rétroaction ;
- envoyant des signaux de balise par la pluralité d'émetteurs (110) selon un accès multiple par répartition en code ;
- recevant la rétroaction en provenance du dispositif distant dans la zone de couverture combinée ;
et
- sélectionnant un émetteur parmi le réseau bidimensionnel d'émetteurs (110) pour l'établissement d'une liaison de données optique sans fil selon la rétroaction reçue du dispositif distant.

14. Procédé d'assistance à un procédé de sélection de faisceau selon la revendication 13, le procédé comprenant les étapes d'un récepteur optique distant (200) :

- détectant une pluralité de signaux de balise envoyés par le dispositif de communication optique sans fil (100) ;
- décodant une première adresse comprise dans un signal de balise avec une force de signal reçu la plus élevée parmi la pluralité de signaux de balise ; et
- fournissant une rétroaction sur la première adresse au dispositif de communication optique sans fil (100).

15. Procédé selon la revendication 14, comprenant en outre les étapes consistant à :

- calculer des résultats de corrélation croisée entre la pluralité détectée de signaux de balise avec chacun des codes utilisés en tant que coordonnées dans le système de coordonnées cartésiennes du dispositif de communication optique sans fil (100) ;
- sommer les résultats de corrélation croisée pour chaque paire de codes représentant des coordonnées sur l'axe X et l'axe Y du système de coordonnées cartésiennes pour dériver une force de signal relative pour chaque signal de balise ; et
- sélectionner le signal de balise avec la force de signal reçu la plus élevée selon la force de signal relative.

FIG. 1

FIG. 2

**FIG. 3**

**FIG. 4**

FIG. 5

**FIG. 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 205844514 U

- US 11057108 B1